(19) Europäisches Patentamt
European Patent Office
Office européen des brevets

(11) Publication number: **0 229 490 B1**

(12) **EUROPEAN PATENT SPECIFICATION**

(45) Date of publication of patent specification: **03.06.92**

(51) Int. Cl.5: **C08L 83/04**, //(C08L83/04, C08K5:54)

(21) Application number: **86309589.9**

(22) Date of filing: **09.12.86**

(54) **Room temperature - curable organopolysiloxane composition.**

(30) Priority: **09.12.85 JP 276407/85**

(43) Date of publication of application:
**22.07.87 Bulletin 87/30**

(45) Publication of the grant of the patent:
**03.06.92 Bulletin 92/23**

(84) Designated Contracting States:
**DE FR GB**

(56) References cited:
**FR-A- 2 251 602**
**FR-A- 2 455 622**
**US-A- 4 304 897**

(73) Proprietor: **Shin-Etsu Chemical Co., Ltd.**
**6-1, Otemachi 2-chome**
**Chiyoda-ku Tokyo 100(JP)**

(72) Inventor: **Inoue, Yoshio**
**3-21, Isobe 4-chome**
**Annaka-shi Gunma-ken(JP)**
Inventor: **Arai, Masatoshi**
**11-11, Isobe 4-chome**
**Annaka-shi Gunma-ken(JP)**
Inventor: **Okami, Takehide**
**10-28, Isobe 3-chome**
**Annaka-shi Gunma-ken(JP)**

(74) Representative: **Baverstock, Michael George Douglas et al**
**BOULT, WADE & TENNANT 27 Furnival Street**
**London, EC4A 1PO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a room temperature-curable organopolysiloxane composition or, more particularly, to a room temperature-curable organopolysiloxane composition suitable for use as a sealing material of buildings with good adhesion and capable of being a fluid of relatively low viscosity even in cold districts with admixture of a sagging-reducing agent having good miscibility with the organopolysiloxane.

Various types of room temperature-curable organopolysiloxane compositions, referred to as RTV compositions hereinbelow, are known in the prior art and are widely used as sealing materials, coating agents and adhesives in a wide variety of industrial fields including building, machine and electric industries. When such a composition is used as a sealing material in industries or buildings, it is usual that the composition is admixed with a sagging-reducing agent in order to prevent the RTV composition from flowing out of the worked surface before the composition is cured to lose flowability.

Several kinds of sagging-reducing agents have been proposed and actually tested in the prior art including, for example, an organopolysiloxane with a high content of phenyl groups disclosed in US-A-4 100 129 and a polyoxyalkylene compound disclosed in JP-A-56 853. The high-phenyl organopolysiloxane is not practically feasible due to the economic disadvantage that a sufficient effect of sagging reduction can be obtained only by the addition of a considerably large amount of the expensive high-phenyl organopolysiloxane. The polyoxyalkylene compounds are also disadvantageous in several respects. For example, polyoxyalkylene compounds are usually a highly viscous fluid or in the form of a wax-like solid in winter because of the high molecular weight thereof so that the compounding work thereof with a RTV composition must be performed by warming the polyoxyalkylene compound. Moreover, polyoxyalkylene compounds usually have low miscibility with organopolysiloxanes so that a polyoxyalkylene compound admixed with a RTV composition sometimes causes bleeding on the surface, detrimental to the adhesion. There is also the disadvantage that the RTV composition admixed with a polyoxyalkylene compound is opaque after curing.

The present invention accordingly seeks to provide a novel room temperature-curable organopolysiloxane composition which can overcome the above described problems and disadvantages in the prior art RTV compositions relative to the admixture of a sagging-reducing agent.

Thus, the room temperature-curable organopolysiloxane composition of the present invention comprises:

(a) 100 parts by weight of a diorganopolysiloxane terminated at the molecular chain ends each with a silanolic hydroxy group and represented by the general formula

$$HO-(-SiR_2-O-)_m-H, \qquad \ldots\ldots \quad (I)$$

in which each R is independently a substituted or unsubstituted monovalent hydrocarbon group and m is a positive integer greater than or equal to 5.

(b) from 0.5 to 30 parts by weight of an organosilane compound represented by the general formula

$R^1_{4-a}SiXa$ , (II)

in which $R^1$ is a substituted or unsubstituted monovalent hydrocarbon group, X is a hydrolyzable group selected from alkoxy, acyloxy, ketoxime, alkenyloxy, amino, aminoxy and amide groups and a is 3 or 4, or a partial hydrolysis product thereof;

(c) from 3 to 100 parts by weight of a fumed silica filler;

(d) from 0.05 to 10 parts by weight of an organosilane compound represented by the general formula

$Y_{3-b}Si(R^2)_b[O(C_xH_{2x}O)_nZ]$, (III)

in which $R^2$ is a substituted or unsubstituted monovalent hydrocarbon group or an organosiloxy group represented by the general formula $-O-SiR^4{}_3$, $R^4$ being a methyl, vinyl or phenyl group, or

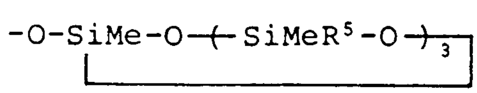 ,

$R^5$ being a methyl, ethyl or propyl group, Y is a hydrolyzable group selected from alkoxy, acyloxy,

ketoxime, alkenyloxy, amino, aminoxy and amide groups, Z is a hydrogen atom or a silyl group of the formula $-Si(R^3)_c(W)_{3-c}$, $R^3$ being a substituted or unsubstituted monovalent hydrocarbon group, W being a hydrolyzable group selected from alkoxy, acyloxy, ketoxime, alkenyloxy, amino, aminoxy and amide groups and c being zero or 1, b is 0 or 1, x is 2, 3 or 4 and n is 1, 2 or 3; and, optionally
(e) up to 10 parts by weight of a curing catalyst.

The figure shows a perspective view of test panels adhesively bonded with the RTV composition for the test of shearing adhesive bonding strength.

As is described above, the inventive RTV composition comprises the essential components (a) to (d) and an optional components (e), the components (a), (b), (c), and (e) being conventional as the ingredients of RTV compositions in the prior art. The admixture of component (d) serves as effective sagging-reducting agent such that the RTV composition admixed therewith may exhibit nearly zero mm slump in the slump test according to the procedure specified in JIS A 3758. Further, the silane compound as the component (d) defined above is usually an oily material having a viscosity in the range from 5 to 50 centistokes at 25 °C with a relatively small viscosity increase at lower temperatures and hence has good workability. The silane compound as the component (d) has good compatibility with the other components in the inventive RTV composition so that the RTV composition after curing is free from the problems of bleeding of the silane compound on the surface and decrease in transparency. Moreover, the inventive RTV composition is highly adhesive to the substrate surface on which it is cured.

The base constituent in the inventive RTV composition is the component (a) which is a diorganopolysiloxane terminated at both molecular chain ends each with a silanolic hydroxy group as represented by the above given general formula (I). In this general formula, the symbol R denotes a monovalent hydrocarbon group exemplified by alkyl groups, e.g methyl, ethyl, propyl and butyl groups, alkenyl groups, e.g. vinyl and allyl groups, aryl groups, e.g. phenyl group, and cycloalkyl groups, e.g. cyclohexyl group, as well as those substituted monovalent hydrocarbon groups obtained by replacing one or all of the hydrogen atoms in the above named hydrocarbon groups with substituent atoms and/or groups such as halogen atoms or cyano groups. The groups denoted by R in a molecule of the component (a) may be the same or different. The subscript m is a positive integer of 5 or larger, preferably large enough to give the diorganopolysiloxane a viscosity in the range from 100 to 1,000,000 centistokes or, preferably, from 3000 to 50,000 centistokes at 25 °C. When the viscosity thereof is lower than 100 centistokes at 25 °C, the RTV composition formulated therewith would have poor mechanical properties after curing. When the viscosity of the diorganopolysiloxane is too large, on the other hand, the consistency of the RTV composition formulated therewith would be too high so that the composition is poorly workable in practical use. The diorganopolysiloxane as the component (a) should have a substantially linear molecular structure as is typically expressed by the general formula (I) but the molecular chain may have a small number of branches to form a three-dimensional molecular structure.

The organosilane compound as the component (b) is a crosslinking agent to react with the silanolic hydroxy groups in the above described diorganopolysiloxane as the component (a). The organosilane compound is represented by the general formula (II) given above. In this formula, the symbol $R^1$ denotes a monovalent hydrocarbon group which is exemplified by the same groups given above as the examples of the group denoted by R in the component (a). The symbol X in the formula denotes a hydrolyzable group selected from, for example, alkoxy groups, acyloxy groups, ketoxime groups, alkenyloxy groups, amino groups, aminoxy groups, or amide groups. Since the subscript m is a positive number of 3 or 4, the organosilane compound should have three or four hydrolyzable groups in a molecule. A partial hydrolysis product of the silane compound also can be used as the component (b).

Particular examples of the organosilane compound suitable as the component (b) include those expressed by the following sturctural formulas, in which the symbols Me, Et, Vi and Ph denote methyl, ethyl, vinyl and phenyl groups, respectively:
$Si(OCOMe)_4$ ; $ViSi(OCOMe)_3$ ; $MeSi(OCOMe)_3$ ; $PhSi(OCOMe)_3$ ; $Si(ON=CMeEt)_4$ ; $ViSi(ON=CMeEt)_3$ ; $MeSi(ON=CMeEt)_3$ ; $PhSi(ON=CMeEt)_3$ ; $ViSi(OMe)_3$ ; $Si(O\text{-}CMe=CH_2)_4$ ; $ViSi(O\text{-}CMe=CH_2)_3$ ; $MeSi(O\text{-}CMe=CH_2)_3$ ; $MeSi(OMe)_3$ ; $ViSi(NEt_2)_3$ ; $MeSi(O\text{-}NEt_2)_3$ ; $(MeO)_3Si(ON=CMeEt)$ ; $ViSi(OMe)(ON=CMeEt)_2$ ; $(CH_2=CMe\text{-}O)Si(ON=CMeEt)_3$ ; $ViSi(O\text{-}CMe=CH_2)(ON=CMeEt)_2$ ; and $ViSi(NMe\text{-}COMe)_3$. These organosilane compounds may be used either singly or as a combination of two kinds or more according to need.

The amount of the component (b) compounded in the inventive RTV composition should be in the range from 0.5 to 30 parts by weight or, preferably, from 2 to 15 parts by weight per 100 parts by weight of the component (a). When the amount thereof is too small, the density of crosslinks in the cured product of the RTV composition would be insufficient after the curing reaction in the presence of the atmospheric moisture. When the amount thereof is too large, on the other hand, the cured product of the RTV

composition may have a too high hardness as a result of the unduly large density of crosslinks.

The component (c) compounded in the inventive RTV composition is a fumed silica filler which may be any of those conventionally used in silicone rubber compositions as a reinforcing filler. It is preferable that the fumed silica filler should have a specific surface area of at least 50 $m^2/g$ in order to obtain a sufficiently high reinforcing effect. Any commercially available fumed silica filler can be used as such but it is optional or sometimes preferable that the surface of the fumed silica be subjected to a hydrophobic treatment with e.g. a low-molecular dimethylpolysiloxane, hexamethyl disilazane, or dimethyl chlorosilane.

The amount of the fumed silica filler as the component (c) compounded in the inventive RTV composition should be in the range from 3 to 100 parts by weight or, preferably, from 3 to 25 parts by weight per 100 parts by weight of the component (a). This is because no sufficient reinforcing effect can be obtained when the amount of the fumed silica filler is smaller than the above mentioned range while an RTV composition compounded with a too large amount of the fumed silica filler would give a cured product having an unduly high hardness. At any rate, the actual amount of the filler compounded in the RTV composition should be determined in consideration of the elastic modulus required for the cured product of the composition.

The component (d) serves as a sagging-reducing agent. It is an organosilane or organosilicon compound represented by the general formula (III) given before, in which $R^2$ is a substituted or unsubstituted monovalent hydrocarbon group exemplified by those groups given before as the examples of the group R in the general formula (I), Y is a hydrolyzable group exemplified by those groups given before as the examples of the group denoted by X in the general formula (II), Z is a hydrogen atom or a silyl group of the formula $-Si(R^3)_c(W)_{3-c}$, $R^3$ being a substituted or unsubstituted monovalent hydrocarbon group similar to $R^2$, W being a hydrolyzable group similar to X, and the subscript c being zero or 1, and the subscripts b, x and n are each a positive integer as defined before. The group $R^2$ also can be an organosiloxy group as defined before.

Such an organosilane compound suitable as the component (d) can be prepared by the condensation reaction of an alkylene glycol or a polyether compound of the general formula $HO(C_xH_{2x}O)_nH$ and a silane compound of the formula $R^2_bSiY_{4-b}$ or $R^3_cSiW_{4-c}$. Examples of the alkylene glycol or polyether compound include, for example, $HOC_2H_4OH$, $HO(C_2H_4O)_2H$, $HO(C_2H_4O)_3H$, $HOCH_2CH_2CH_2OH$, $HO(CH_2CH_2CH_2O)_2H$, $HO(CH_2CH_2CH_2O)_3H$, $HOCH_2CHMeOH$, $HO(CH_2CHMeO)_2H$, $HO(CH_2CHMeO)_3H$, $HOCH_2CH_2CH_2CH_2OH$, $HO(CH_2CH_2CH_2CH_2O)_2H$, $HO(CH_2CH_2CH_2CH_2O)_3H$, $HOCH_2CMe_2OH$, $HO(CH_2CMe_2O)_2H$ and $HO(CH_2CMe_2O)_3H$ and the examples of the silane compound include, for example, $Si(OCOMe)_4$, $ViSi(OCOMe)_3$, $MeSi(OCOMe)_3$, $PhSi(OCOMe)_3$, $Si(ON=CMeEt)_4$, $ViSi(ON=CMeEt)_3$, $MeSi(ON=CMeEt)_3$, $PhSi(ON=CMeEt)_3$, $ViSi(OMe)_3$, $Si(O-CMe=CH_2)_4$, $MeSi(O-CMe=CH_2)_3$, $ViSi(O-CMe=CH_2)_3$, $ViSi(NEt_2)_3$, $ViSi(ONEt_2)_3$, $(MeO)_3Si(ON=CMeEt)$, $CH_2=CMe-O)Si(ON=CMeEt)_3$, $ViSi(O-CMe=CH_2)$ $(ON=CMeEt)_2$ and $MeSi(NEt-CO-Me)_3$, in which the symbols Me, Et, Vi and Ph denote methyl, ethyl, vinyl and phenyl groups, respectively.

Several of the particular examples of the organosilane or organosilicon compound suitable as the component (d) include the compounds expressed by the following structural formulas:

$$(MeCOO)_2MeSi-O-(C_2H_4O)_3-SiMe(OCOMe)_2;$$
$$(MeCOO)_2ViSi-O-(C_2H_4O)_2-SiVi(OCOMe)_2;$$
$$(MeEtC=N-O)_2MeSi-O-C_2H_4-O-SiMe(O-N=CMeEt)_2;$$
$$(MeEtC=N-O)_2ViSi-O-(C_2H_4O)_2-SiVi(O-N=CMeEt)_2;$$
$$(MeEtC=N-O)_2MeSi-O-(C_2H_4O)_3-SiVi(O-N=CMeEt)_2;$$
$$(CH_2=CMe-O)_2MeSi-O-(C_2H_4O)_2-Si(O-CMe=CH_2)_2;$$
$$(Et_2N-O)_2MeSi-O-(C_2H_4O)_2-SiMe(O-NEt_2)_2; \text{ and}$$
$$(MeCO-NMe)_2ViSi-O-(C_2H_4O)_3-SiVi(NMe-COMe)_2.$$

The amount of the above described organosilane compound as the component (d) compounded in the inventive RTV composition should be in the range from 0.05 to 10 parts by weight or, preferably, from 0.1 to 3 parts by weight per 100 parts by weight of the component (a). When the amount of the component (d) is smaller than above, no satisfactory sagging-reducing effect can be obtained as a matter of course. When the amount thereof is too large, on the other hand, the physical properties of the cured product of the RTV

composition may be adversely affected.

The component (e) is a catalyst which promotes the condensation reaction between the components (a) and (b). The component (e) is exemplified by various known compounds including metal salts of carboxylic acids, e.g. lead 2-ethylhexoate, dibutyl tin diacetate, dibutyl tin dilaurate, butyl tin tri(2-ethylhexoate), iron 2-ethylhexoate, cobalt 2-ethylhexoate, manganese 2-ethylhexoate, zinc 2-ethylhexoate, tin (II) caprylate, tin naphthenate, tin oleate, tin butyrate, titanium naphthenate, zinc naphthenate, cobalt naphthenate and zinc stearate, organic titanate esters, e.g. tetrabutyl titanate, tetra(2-ethylhexyl) titanate, triethanolamine titanate and tetra(isopropenyloxy) titanate, organic titanium compounds, e.g. organosiloxy titanium and $\beta$-carbonyl titanium, aluminum alkoxide compounds, aminoalkyl-substituted alkoxysilane compounds, e.g. 3-aminopropyl triethoxy silane and N-(3-trimethoxysilylpropyl) ethylene diamine, amine compounds and salts thereof, e.g. hexyl amine and dodecylamine phosphate, quaternary ammonium salts, e.g. benzyl triethyl ammonium acetate, alkali metal salts of lower carboxylic acids, e.g. potassium acetate, sodium acetate and lithium oxalate, dialkyl hydroxylamine compounds, e.g. dimethyl hydroxylamine and diethyl hydroxylmaine, and guanidine compounds, e.g. 3-(tetramethylguanidino)propyl trimethoxy silane. The component (e) above described is not essential in the inventive RTV composition so that the amount thereof is not particularly limitative although it is preferable that the amount thereof does not exceed 10 parts by weight per 100 parts by weight of the component (a).

The RTV composition of the present invention can be obtained by merely blending the above described components (a) to (d) and, optionally, (e) uniformly under an anhydrous condition. The inventive RTV composition may be admixed according to need with various kinds of known additives including plasticizers, coloring agents, i.e. pigments, heat-resistance or cold-resistance improvers, flame retardants, fungicides, dehydrating agents, silane coupling agents, and adhesion improvers.

In the following, the RTV composition of the present invention is described in more detail by way of examples as preceded by the description of the synthetic preparation of the organosilane compounds used as the component (d) in the RTV composition. In the following examples, the term of "parts" always refers to "parts by weight" and the values of viscosity are all those obtained by the measurement at 25 °C. The symbols Me, Et, Vi and Pr in the following denote methyl, ethyl, vinyl and propyl groups, respectively. The Preparations and Examples are non-limiting.

Preparation 1.

Into 150 g (1 mole) of triethylene glycol in a flask were added 617 g (2.05 moles) of methyl tri(methyl ethyl ketoxime) silane dropwise over a period of 30 minutes and the mixture was then heated at 60 to 70 °C for 60 minutes under agitation. The gas chromatographic analysis of the reaction mixture after the reaction indicated that the triethylene glycol could not be detected in the mixture. Then the reaction mixture was subjected to distillation to strip the methyl ethyl ketoxime formed as the by-product and other volatile materials to give a liquid product having a viscosity of 152 mm²/s and a refractive index of 1.4563. This product was identified by the results of the elementary analysis to be a compound expressed by the structural formula

$$(EtMeC{=}NO)_2SiMe{-}O{-}(C_2H_4O)_3{-}SiMe(ON{=}CMeEt)_2 \ .$$

This compound is referred to as the compound A hereinbelow.

Preparation 2.

The synthetic procedure was substantially the same as in Preparation 1 except that 617 g of methyl tri-(methyl ethyl ketoxime) silane were replaced with 642 g (2.05 moles) of vinyl tri(methyl ethyl ketoxime) silane. The thus obtained liquid product had a viscosity of 175 mm²/s and a refractive index of 1.4576 and was identified by the results of the elementary analysis to be a compound expressed by the structural formula

$$(EtMeC{=}NO)_2SiVi{-}O{-}(C_2H_4O)_3{-}SiVi(ON{=}CMeEt)_2 \ .$$

This compound is referred to as the compound B hereinbelow.

Preparation 3.

Into 150 g (1 mole) of triethylene glycol in a flask were added 322 g (1.03 moles) of vinyl tri(methyl ethyl ketoxime) silane dropwise over a period of 30 minutes and the mixture was heated at 50 to 60 °C for 60 minutes under agitation. The gas chromatographic analysis indicated absence of triethylene glycol in the reaction mixture. Thereafter, 401 g (1.05 moles) of 1,3,5,7-tetramethyl-1-hydroxy-3,5,7-tripropyl cyclotetrasiloxane were added to the reaction mixture dropwise over a period of 30 mintues and the mixture was heated at 60 to 70 °C for 60 minutes under agitation to complete the reaction. Distillation of the reaction mixture after completion of the reaction to strip the low-boiling matters gave a liquid product having a viscosity of 268 $mm^2/s$ and a refractive index of 1.4495, which was identified by the results of the elementary analysis to be a compound expressed by the structural formula

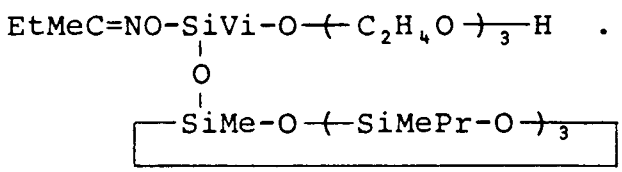

Examples 1 to 3 and Comparative Example 1.

Base compounds I, II and III were prepared in Examples 1, 2 and 3, respectively, each by uniformly blending 100 parts of a dimethylpolysiloxane having a viscosity of 20,000 $mm^2/s$ and terminated at both molecular chain ends each with a silanolic hydroxy group, 12 parts of a fumed silica filler having a specific surface area of 200 $m^2/g$ and surface-treated with octamethyl cyclotetrasiloxane and the compound A, B or C, respectively, obtained in the above described Preparations 1 to 3 in an amount indicated in Table 1 below. RTV compositions I, II and III were prepared each by uniformly blending under an anhydrous condition 100 parts of the above prepared base compound I, II or III, respectively, 8 parts of methyl tri-(methyl ethyl ketoxime) silane and 0.1 part of dibutyl-tin dilaurate.

For comparison, another RTV composition IV was prepared in Comparative Example 1 in the same formulation as above excepting omission of the compound A, B and C as the sagging-reducing agent.

Each of these four RTV compositions I to IV was subjected to the slump test according to the procedure specified in JIS A 5758 to give the results shown in Table 1, from which it is clear that the sagging-reducing agents, i.e. the compounds A, B and C, are very effective in preventing sagging of the composition before curing.

Table 1

| Composition No. | I | II | III | IV |
|---|---|---|---|---|
| Sagging-reducing agent (parts) | Compound A (0.5) | Compound B (0.5) | Compound C (0.3) | None |
| Slump, mm | 0 | 0 | 0 | 12 |

Example 4 and Comparative Example 2.

A RTV composition, referred to as the composition V hereinbelow, was prepared in Example 4 by

uniformly blending 100 parts of a base compound II prepared from 100 parts of the same dimethylpolysiloxane as used in the preceding examples and 0.5 part of the compound B with 8 parts of vinyl tri(methyl ethyl ketoxime) silane, 0.1 part of dibutyl tin dioctoate and 0.5 part of 3-aminopropyl triethoxy silane under anhydrous conditions. For comparison, another RTV composition, referred to as the composition VI hereinbelow, was prepared in Comparative Example 2 with the same formulation as above except that the compound B used in the preparation of the base compound II was replaced with the same amount of a polyethylene glycol having an average molecular weight of about 400.

These compositions V and VI were each subjected to the measurement of the slump according to the procedure specified in JIS A 5758 and the adhesive bonding power. Thus, two aluminum test panels of each 25 mm width were coated with the composition on the 10 mm long end area and were put one on the other as is illustrated in the accompanying drawing to sandwich a 2 mm thick layer of the composition therebetween. After standing for 72 hours at room temperature, the test panels were pulled apart to determine the shearing adhesive bonding strength. The results were as shown in Table 2 below.

Table 2

| Composition No. | | V | VI |
|---|---|---|---|
| Sagging-reducing agent (parts) | | Compound B (0.5) | Polyethylene glycol (0.5) |
| Slump, mm | | 0 | 0 |
| Shearing test of adhesively bonded aluminum panels | Adhesive bonding strength, $kg/cm^2$ | 12 | 4 |
| | Cohesive failure, % | 100 | 0 |

Examples 5 to 8 and Comparative Example 3.

Base compounds IV, V, VI and VII were prepared each by uniformly blending 100 parts of a dimethylpolysiloxane having a viscosity of 20,000 $mm^2/s$ and terminated at both molecular chain ends each with a slanolic hydroxy group with 15 parts of the same fumed silica filler as in Example 1 and one of the compounds A, B and C prepared in Preparations 1 to 3 in an amount indicated in Table 3 below as the sagging-reducing agent. Another base compound VIII was prepared with the same formulation as above excepting omission of the sagging-reducing agent.

Thereafter, five RTV compositions, referred to as the compositions VII, VIII, IX, X and XI hereinbelow, for Examples 5 to 8 and Comparative Example 3, respectively, were prepared each by uniformly blending 100 parts of one of the base compounds IV to VIII, respectively, with 6 parts of methyl triacetoxy silane and 0.1 part of dibutyl tin diacetoxy silane for the compositions VII, VIII and IX or dibutyl tin dilaurate for the compositions X and XI under anhydrous conditions.

These compositions VII to XI were subjected to the slump test according to JIS A 5758, measurement of the mechanical properties of a cured silicone rubber sheet thereof having a thickness of 2 mm and measurement of the shearing adhesive bonding strength in the same manner as in Example 4 to give the results shown in Table 3.

Table 3

| Composition No. | | VII | VIII | IX | X | XI |
|---|---|---|---|---|---|---|
| Sagging-reducing agent (parts) | | Compound A (0.3) | Compound A (1.0) | Compound B (0.5) | Compound C (0.5) | None |
| Slump, mm | | 0 | 0 | 0 | 0 | (infinite) |
| Cured sheet | Hardness, JIS A | 32 | 30 | 33 | 32 | 31 |
| | Tensile strength, kg/cm$^2$ | 24 | 23 | 20 | 21 | 20 |
| | Ultimate elongation, % | 370 | 400 | 480 | 500 | 470 |
| Shearing adhesive bonding strength of aluminum panels, kg/cm$^2$ | | 10 | 18 | 13 | 14 | 3 |

## Claims

**1.** A room temperature-curable organopolysiloxane composition which comprises:

(a) 100 parts by weight of a diorganopolysiloxane terminated at both molecular chain ends each with a silanolic hydroxy group and represented by the general formula

$$HO-(-SiR_2-O-)_m-H, \qquad (I)$$

in which each R is independently a substituted or unsubstituted monovalent hydrocarbon group and m is a positive integer greater than or equal to 5.

(b) from 0.5 to 30 parts by weight of an organosilane compound represented by the general formula

$R^1_{4-a}SiX_a$, (II)

in which $R^1$ is a substituted or unsubstituted monovalent hydrocarbon group, X is a hydrolyzable group selected from alkoxy, acyloxy, ketoxime, alkenyloxy, amino, aminoxy and amide groups and a is 3 or 4, or a partial hydrolysis product thereof;

(c) from 3 to 100 parts by weight of a fumed silica filler; characterised in that it further comprises

(d) from 0.05 to 10 parts by weight of an organosilane compound represented by the general formula

$$Y_{3-b}Si(R^2)_b[O(C_xH_{2x}O)_nZ], \quad (III)$$

in which $R^2$ is a substituted or unsubstituted monovalent hydrocarbon group or an organosiloxy group represented by the general formula $-O-SiR^4{}_3$, $R^4$ being a methyl, vinyl or phenyl group, or

$$-O-\underline{SiMe-O-(-SiMeR^5-O-)_3} \; ,$$

$R^5$ being a methyl, ethyl or propyl group, Y is a hydrolyzable group selected from alkoxy, acyloxy, ketoxime, alkenyloxy, amino, aminoxy and amide groups, Z is a hydrogen atom or a silyl group of the formula $-Si(R^3)_c(W)_{3-c}$, $R^3$ being a substituted or unsubstituted monovalent hydrocarbon group, W being a hydrolyzable group selected from alkoxy, acyloxy, ketoxime, alkenyloxy, amino, aminoxy and amide groups and c being zero or 1, x is 2, 3 or 4, b is 0 or 1 and n is 1, 2 or 3.

**2.** A room temperature-curable organopolysiloxane composition as claimed in claim 1 which further comprises as component (e) up to 10 parts by weight of a curing catalyst.

**3.** A room temperature-curable organopolysiloxane composition as claimed in claim 1 or claim 2 wherein the diorganopolysiloxane (component (a)) has a viscosity in the range from 100 to 1,000,000 $mm^2/s$ at 25 ° C.

**4.** A room temperature-curable organopolysiloxane composition as claimed in any one of claims 1 to 3 wherein the fumed silica filler (component (c)) has a specific surface area of at least 50 $m^2/g$.

**5.** A room temperature-curable organopolysiloxane composition as claimed in any one of claims 1 to 4 wherein the hydrolyzable group denoted by X in the component (b) is a methyl ethyl ketoxime group or an acetoxy group.

**6.** A room temperature-curable organopolysiloxane composition as claimed in any one of claims 1 to 5 wherein the organosilane compound (component (d)) is a compound of formula.

$$(EtMeC{=}NO)_2SiR'-O-(-CH_2CH_2O-)_3-SiR'-(ON{=}CMeEt)_2$$

in which Me is a methyl group, Et is an ethyl group and R′ is a methyl or vinyl group; or of formula

$$(MeCO-O)_2SiR'-O-(-CH_2CH_2O-)_3SiR'(O-COMe)_2$$

in which Me is a methyl group and R′ is a methyl or vinyl group.

**7.** A process for the preparation of a room temperature-curable organopolysiloxane composition as claimed in claim 1 which comprises blending together components (a) to (d) and, optionally (e), under anhydrous conditions.

**8.** The use of an organosilane compound of formula (III) to decrease sagging in a room temperature-curable organopolysiloxane composition as defined in claim 1.

**9.** The use of a room temperature-curable organopolysiloxane composition as claimed in any one of claims 1 to 6 as sealant, coating agent or adhesive.

**Revendications**

**1.** Composition d'organopolysiloxane durcissable à température ambiante qui comprend :

(a) 100 parties en poids d'un diorganopolysiloxane terminé à chaque extrémité de la chaine moléculaire par un groupe hydroxy silanolique et représenté par la formule générale

$$HO-(-SiR_2-O-)_m-H, \quad \cdots\cdots (I)$$

où chaque R est indépendamment un groupe hydrocarbure monovalent substitué ou non substitué et m est un nombre entier positif plus grand que ou égal à 5;

(b) 0,5 à 30 parties en poids d'un composé d'organosilane représenté par la formule générale

$R^1_{4-a}SiX_a$ , (II)

où $R^1$ est un groupe hydrocarbure monovalent substitué ou non substitué, X est un groupe hydrolysable choisi parmi des groupes alcoxy, acyloxy, cétoxime, alkényloxy, amino, aminoxy et amide et a est 3 ou 4, ou bien son produit d'hydrolyse partielle ;

(c) 3 à 100 parties en poids d'une charge de silice fumée ; caractérisée en ce qu'elle contient de plus

(d) 0,05 à 10 parties en poids d'un composé d'organosilane représenté par la formule générale

$Y_{3-b}Si(R^2)_b[O(C_xH_{2x}O)_nZ]$ (III)

où $R^2$ est un groupe hydrocarbure monovalent substitué ou non substitué ou bien un groupe organosiloxy représenté par la formule générale $-O-SiR^4_3$ , $R^4$ étant un groupe méthyle, vinyle ou phényle, ou

$$-O-SiMe-O-(-SiMeR^5-O-)_3 \quad ,$$

$R^5$ étant un groupe méthyle, éthyle ou propyle, Y est un groupe hydrolysable choisi parmi les groupes alcoxy, acyloxy, cétoxime, alkényloxy, amino, aminoxy et amide, Z est un atome d'hydrogène ou un groupe silyle de la formule $-Si(R^3)_c(W)_{3-c}$ , $R^3$ étant un groupe hydrocarbure monovalent substitué ou non substitué, W étant un groupe hydrolysable choisi parmi les groupes alcoxy, acyloxy, cétoxime, alkényloxy, amino, aminoxy et amide et c étant zéro ou 1, b est zéro ou 1, x est 2, 3 ou 4 et n est 1, 2 ou 3 .

**2.** Composition d'organopolysiloxane durcissable à température ambiante selon la revendication 1 qui contient de plus, en tant que composant (e), jusqu'à 10 parties en poids d'un catalyseur de durcissement.

**3.** Composition d'organopolysiloxane durcissable à température ambiante selon la revendication 1 ou la revendication 2 où ledit organopolysiloxane (composant (a)) a une viscosité comprise entre 100 et 1.000.000 de $mm^2/s$ à 25 ° C.

**4.** Composition d'organopolysiloxane durcissable à température ambiante selon l'une quelconque des revendications 1 à 3 où la charge de silice fumée (composant(c)) a une aire superficielle spécifique d'au moins 50 $m^2/g$.

**5.** Composition d'organopolysiloxane durcissable à température ambiante selon l'une quelconque des revendications 1 à 4 où le groupe hydrolysable désigné par X dans le composant (b) est un groupe méthyl éthyl cétoxime ou un groupe acétoxy.

**6.** Composition d'organopolysiloxane durcissable à température ambiante selon l'une quelconque des revendications 1 à 5 où le composé d'organosilane (composant(d) est un composé de la formule

$$(EtMeC{=}NO)_2SiR'{-}O{-}(CH_2CH_2O)_3{-}SiR'{-}(ON{=}CMeEt)_2$$

où Me est un groupe méthyle, Et est un groupe éthyle et R' est un groupe méthyle ou vinyle ; ou de la formule

$$(MeCO{-}O)_2SiR'{-}O{-}(CH_2CH_2O)_3{-}SiR'(O{-}COMe)_2$$

où Me est un groupe méthyle et R' est un groupe méthyle ou vinyle.

**7.** Procédé pour la préparation d'une composition d'organopolysiloxane durcissable à température ambiante selon la revendication 1, qui comprend le mélange des composants (a) à (d) et facultativement (e), en conditions anhydres.

**8.** Utilisation d'un composé d'organosilane de la formule (III) pour diminuer le fléchissement dans une composition d'organopolysiloxane durcissable à température ambiante selon la revendication 1.

**9.** Utilisation d'une composition d'organopolysiloxane durcissable à température ambiante,selon l'une quelconque des revendications 1 à 6, comme agent d'étanchéification, agent de revêtement ou adhésif.

**Patentansprüche**

**1.** Bei Raumtemperatur härtbare Organopolysiloxan-Zusammensetzung, die umfaßt:
(a) 100 Gew.-Teile eines Diorganopolysiloxans, das an beiden Kettenenden seines Moleküls eine silanolische Hydroxygruppe trägt, und die allgemeine Formel besitzt

$$HO{-}(SiR_2{-}O)_m{-}H \qquad (I),$$

worin jedes
R unabhängig eine substituierte oder unsubstituierte monovalente Kohlenwasserstoffgruppe und
m eine positive ganze Zahl größer oder gleich 5 sind,
(b) 0,5 bis 30 Gew.-Teile einer Organosilanverbindung der allgemeinen Formel

$R^1_{4-a}SiX_a$ (II),

worin
$R^1$ eine substituierte oder unsubstituierte monovalente Kohlenwasserstoffgruppe ist,
X eine hydrolysierbare Gruppe ist, die ausgewählt wird unter Alkoxy-, Acyloxy-, Ketoxim-, Alkenyloxy-, Amino-, Aminoxy- und Amid-Gruppen
und
a gleich 3 oder 4 ist,
oder ein partielles Hydrolyseprodukt dieser Verbindung,
(c) 3 bis 100 Gew.-Teile eines kolloidalen Siliciumdioxid-Füllstoffs,
**dadurch gekennzeichnet,** daß sie weiter umfaßt
(d) 0,05 bis 10 Gew.-Teile einer Organosilanverbindung der allgemeinen Formel III

$Y_{3-b}Si(R^2)_b[O(C_xH_{2x}O)_nZ]$ (III),

worin
$R^2$ eine substituierte oder unsubstituierte monovalente Kohlenwasserstoffgruppe oder eine Organosiloxygruppe der allgemeinen Formel $-O-SiR^4_3$ ist, worin $R^4$ eine Methylgruppe, eine Vinylgruppe oder eine Phenylgruppe ist oder

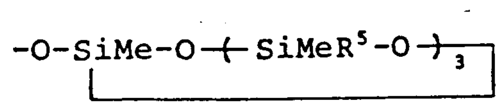,

worin $R^5$ eine Methylgruppe, eine Ethylgruppe oder eine Propylgruppe,

Y eine hydrolysierbare Gruppe ist, die ausgewählt wird unter Alkoxy-, Acyloxy-, Ketoxim-, Alkenyloxy-, Amino-, Aminoxy- und Amid-Gruppen,

Z ein Wasserstoffatom oder eine Silylgruppe der Formel $-Si(R^3)_c(W)_{3-c}$ ist, worin $R^3$ eine substituierte oder unsubstituierte monovalente Kohlenwasserstoffgruppe, W eine hydrolysierbare Gruppe ist, die ausgewählt wird unter Alkoxy-, Acyloxy-, Ketoxim-, Alkenyloxy-, Amino-, Aminoxy- und Amid-Gruppen und c gleich 0 oder 1,

x gleich 2, 3 oder 4,

b gleich 0 oder 1

und

n gleich 1, 2 oder 3 ist.

**2.** Bei Raumtemperatur härtbare Organopolysiloxan-Zusammensetzung nach Anspruch 1, die daneben als Komponente (e) bis zu 10 Gew.-Teile eines Härtungskatalysators enthält.

**3.** Bei Raumtemperatur härtbare Organopolysiloxan-Zusammensetzung nach Anspruch 1 oder 2, worin das Diorganopolysiloxan (Komponente (a)) eine Viskosität im Bereich von 100 bis 1,000.000 $m^2/s$ bei 25 °C besitzt.

**4.** Bei Raumtemperatur härtbare Organopolysiloxan-Zusammensetzung nach einem der Ansprüche 1 bis 3, worin der kolloidale Siliciumdioxid-Füllstoff (Komponente (c)) eine spezifische Oberfläche von mindestens 50 $m^2/g$ besitzt.

**5.** Bei Raumtemperatur härtbare Organopolysiloxan-Zusammensetzung nach einem der Ansprüche 1 bis 4, worin die durch X bezeichnete hydrolysierbare Gruppe in Komponente (b) eine Methylethylketoximgruppe oder eine Acetoxygruppe ist.

**6.** Bei Raumtemperatur härtbare Organopolysiloxan-Zusammensetzung nach einem der Ansprüche 1 bis 5, worin die Organosilanverbindung (Komponente (d)) eine Verbindung der Formel

$$(EtMeC{=}NO)_2SiR'-O-(CH_2CH_2O)_3-SiR'-(ON{=}CMeEt)_2$$

worin

Me eine Methylgruppe,

Et eine Ethylgruppe

und

R' eine Methyl- oder Vinylgruppe sind,

oder der Formel

$$(MeCO-O)_2SiR'-O-(CH_2CH_2O)_3-SiR'(O-COMe)_2$$

ist, worin

Me eine Methylgruppe

und

R' eine Methyl- oder Vinylgruppe sind.

**7.** Verfahren zur Herstellung einer bei Raumtemperatur härtbaren Organopolysiloxan-Zusammensetzung nach Anspruch 1, das das Mischen der Komponenten (a) bis (d) und gewünschtenfalls (e) unter wasserfreien Bedingungen beinhaltet.

8. Verwendung einer Organosilanverbindung der Formel (III) zur Verminderung der Läuferbildung in einer bei Raumtemperatur härtbaren Organopolysiloxan-Zusammensetzung nach Anspruch 1.

9. Verwendung einer bei Raumtemperatur härtbaren Organopolysiloxan-Zusammensetzung nach einem der Ansprüche 1 bis 6, als Dichtungsmittel, Beschichtungsmittel oder Klebstoff.

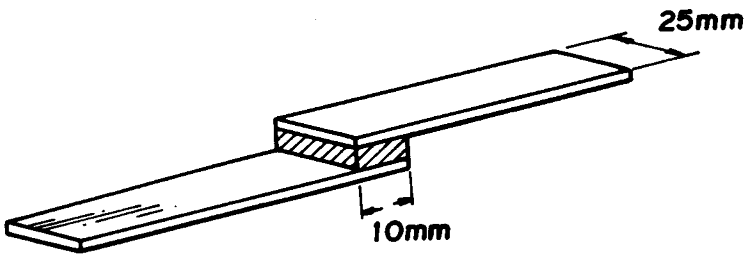
25mm
10mm